# EUROPEAN PATENT SPECIFICATION

(11) **EP 3 859 508 B1**
(45) Date of publication and mention of the grant of the patent: **19.07.2023**
(21) Application number: 21151029.2
(22) Date of filing: 11.01.2021
(51) Int. Cl.: G06F 3/06, G06N 3/063, G06N 3/084, G06N 3/044, G06N 3/045

(54) **STORAGE CONTROLLERS AND STORAGE SYSTEMS**
SPEICHERSTEUERUNGEN UND SPEICHERSYSTEME
ORGANES DE COMMANDE DE STOCKAGE ET SYSTÈMES DE STOCKAGE

(30) Priority: 17.01.2020 KR 20200006560
(43) Date of publication of application: 04.08.2021
(73) Proprietor: Samsung Electronics Co., Ltd., Gyeonggi-do 16677 (KR)
(72) Inventor: JANG, Jaehun, Suwon-si Gyeonggi-do 16677 (KR); SON, Hongrak, Suwon-si Gyeonggi-do 16677 (KR)
(74) Representative: Marks & Clerk LLP

(56) References cited:
- US-A1- 2017 011 288
- US-A1- 2019 317 901

## Description

### 1. Technical Field

The present invention generally relates to a system comprising a storage controller, and to a method of operating a storage controller comprising a learning pattern processor and a storage processor. The disclosure relates generally to semiconductor integrated circuits, and more particularly to a storage controller, a storage system including a storage controller and a method of operating a storage controller.

### 2. Background

Artificial intelligence (AI) technology generally refers to technology that emulates human abilities, such as perception, learning, reasoning, and natural language processing, using computing systems. Recently deep learning is widely used to implement the AI technology. A huge amount of data has to be processed repeatedly in performing the deep learning, and thus computing systems of higher performance is required. US2019317901(A1) relates to a deep neural network, more particularly, to a system and method for optimizing performance of a solid-state drive (SSD) using a deep neural network.

### SUMMARY

According to a first aspect of the present invention, there is provided a system as defined by claim 1.

According to a further aspect of the present invention, there is provided a method of operating a storage controller comprising a learning pattern processor and a storage processor, as defined by claim 12.

Preferred embodiments are defined by the dependent claims.

### BRIEF DESCRIPTION OF THE DRAWINGS

Some example embodiments of the present disclosure will be more clearly understood from the following detailed description taken in conjunction with the accompanying drawings.
FIG. 1 is a block diagram illustrating a storage controller according to some example embodiments.
FIG. 2 is a block diagram illustrating some example embodiments of a learning pattern processor included in the storage controller of FIG. 1.
FIG. 3 is a diagram for describing processes of deep learning performed by a storage system according to some example embodiments.
FIG. 4A is a diagram illustrating communication between a host and a storage memory during a forward propagation (FP).
FIG. 4B is a diagram illustrating communication between the host and the storage memory during a backward propagation (BP).
FIG. 5 is a diagram for describing a method of estimating a size of learning data according to some example embodiments.
FIG. 6 is a diagram for describing a method of estimating a size of weight values and bias values according to some example embodiments.
FIG. 7 is a diagram for describing a method of estimating a size of first intermediate result values and a size of second intermediate result values according to some example embodiments.
FIG. 8 is a diagram some example embodiments of a learning pattern processor included in the storage controller of FIG. 1.
FIG. 9 is a diagram for describing processes of deep learning performed by the storage controller of FIG. 8.
FIG. 10 is a diagram some example embodiments of a learning pattern processor included in the storage controller of FIG. 1.
FIGS. 11, 12, and 13 are flow charts illustrating a method of operating a storage controller according to some example embodiments.
FIGS. 14A, 14B, and 14C are diagrams for describing examples of a network structure that is driven by an artificial intelligence (AI) function implemented in a storage device according to some example embodiments.
FIG. 15 is a block diagram illustrating an electronic system according to some example embodiments.

### DETAILED DESCRIPTION

Some example embodiments may provide a storage controller, a storage system including a storages controller and a method of operating a storage controller, capable of increasing a speed of deep learning.

According to some example embodiments, a storage controller includes a learning pattern processor and a storage processor. The learning pattern processor estimates request prediction data to be requested by a host per epoch to generate estimated result values of the request prediction data. The storage processor read the request prediction data from a storage memory to store the request prediction data in a buffer memory based on the estimated result values, the reading and the storing being before the host issues a read request for the request prediction data, an operation speed of the buffer memory being higher than an operation speed of the storage memory.

According to some example embodiments, a storage system includes a host, a storage memory and a storage controller. The Storage controller includes a buffer memory, a learning pattern processor and a storage processor. The host performs a deep learning. The storage memory stores data for the deep learning. The buffer memory having higher operation speed than the storage memory. The learning pattern processor configured to estimate request prediction data to be requested by a host per epoch to generate estimated result values of the request prediction data. The storage processor configured to read the request prediction data from a storage memory to store the request prediction data in a buffer memory based on the estimated result values before the host issues a read request for the request prediction data.

According to some example embodiments, a method of operating a storage controller includes, estimating request prediction data to be requested by a host per epoch to generate estimated result values of the request prediction data, and reading the request prediction data from a storage memory to store the request prediction data in a buffer memory based on the estimated result values before the host issues a read request for the request prediction data, an operation speed of the buffer memory being higher than an operation speed of the storage memory.

The storage controller, the storage system and the method according to some example embodiments may efficiently increase the speed of performing the deep learning by moving the request prediction data, which is expected to be requested by the host, from the storage memory to the buffer memory having the higher operation speed than that of the storage memory, in advance before the host issues the read request for the request prediction data and rapidly transfer the request prediction data stored in the buffer memory to the host in response to the read request.

In this disclosure, a system including a storage controller, a storage memory and a host may be referred to as a storage system. The storage system may be dedicated to performing deep learning for implementing an artificial intelligence (AI) technology. The storage controller may receive only data used in deep learning, write and read requests for the data, and an address corresponding to the data. Request prediction data represents data that is expected to be requested by the host per epoch.

According to some example embodiments, the request prediction data includes first data and second data.

The first data is learning data requested from the host to perform a deep learning. The learning data may include voice data, image data, etc. which are used in performing the deep learning. The learning data may be referred to as training data or sample data.

The second data are variables that are updated repeatedly per epoch based on the first data during the deep learning. The variables may include weight values, bias values, intermediate result values, etc. which are updated per epoch during the deep learning.

Various example embodiments will be described more fully hereinafter with reference to the accompanying drawings, in which some example embodiments are shown. In the drawings, like numerals refer to like elements throughout. The repeated descriptions may be omitted.

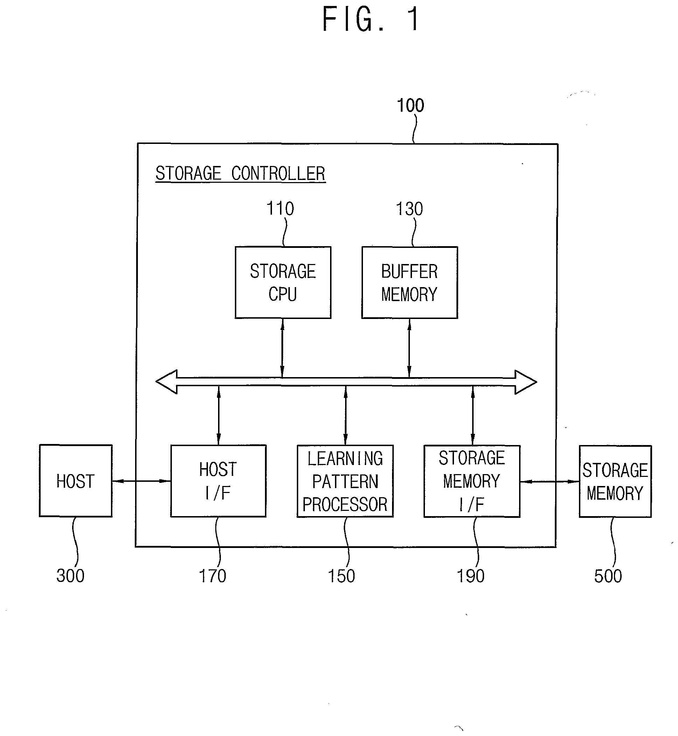

FIG. 1 is a block diagram illustrating a storage controller according to some example embodiments.

Referring to FIG. 1, a storage controller 100 includes a storage processor 110, a buffer memory 130, a learning pattern processor, a learning pattern processor 150, a host interface 170 and a storage memory interface 190.

The storage processor 110 may be implemented with a central processing unit (CPU) configured to control overall operations of the components 130, 150, 170 and 190. The storage processor 110 may be referred to as a storage CPU. For example, the storage processor 110 may control the components 130, 150, 170 and 190 to provide data stored in a storage memory 500 to a host 300 when a read request is received from the host 300, and to provide data from the host 300 to the storage memory 500 when a write request is received from the host 300.

The host 300, also referred to herein as a "host device," may be configured to perform a deep learning operation, also referred to herein as "deep learning." The host 300 may issue the write and read requests repeatedly while a deep learning is performed. The host 300 may perform a forward propagation (FP) and a backward propagation (BP) per epoch and many variable of the deep learning may be updated during the FP and the BP. The storage memory 500 may be configured to store data for (e.g., data associated with) the storage memory 500.

According to some example embodiments, the learning pattern processor 150 estimates request prediction data, which is expected to be requested by the host 300 per epoch (e.g., estimate request prediction data to be requested by the host per epoch) to generate estimated result values of the request prediction data. Based on the estimated result values, the storage processor 110 reads request prediction data from the storage memory 500 to store the request prediction data in the buffer memory 130, in advance, before the host issues a read request for the request prediction data. When the host 300 issues the read request for the request prediction data (e.g., in response to such request), the storage processor 110 may provide to the host 300 with the request prediction data stored in the buffer memory 130 instead of the request prediction data stored in the storage memory 500.

According to some example embodiments, the request prediction data includes first data and second data. The first data is learning data X requested from the host 300 to perform a deep learning. The learning data X may include voice data, image data, etc. which are used in performing the deep learning. The learning data may be referred to as training data or sample data. The second data are variables that are updated repeatedly per epoch based on the first data during the deep learning. The variables may include at least one of weight values (e.g., W[1:N]), bias values (e.g., b[1:N] where N is a natural number greater than one), or intermediate result values (e.g., A[1:N] and/or Z[1:N]) of the deep learning.

To reduce a time for transferring the request prediction data to the host 300, the buffer memory 130 is implemented with a memory having a higher operation speed than an operation speed of the storage memory 500. Restated, an operation speed of the buffer memory 130 is higher than an operation speed of the storage memory 500. According to some example embodiments, the buffer memory 130 may include a volatile memory or a nonvolatile memory. The volatile memory may include at least one of a dynamic random access memory (DRAM) or a static random access memory (SRAM), and the nonvolatile memory may include at least one of a phase change random access memory (PRAM), a ferroelectric random access memory (FRAM), or a magnetic random access memory (MRAM), but example embodiments are not limited thereto.

As such, the storage controller 100 moves the request prediction data, which is expected to be requested by the host 300 during the deep learning, from the storage memory 500 to the buffer memory 130 having the higher operation speed than the storage memory 500, in advance, before the host issues the read request for the request prediction data. When the host 300 issues the read request for the request prediction data, the storage processor 110 may transfer, to the host 300, the request prediction data stored in the buffer memory 130 instead of the request prediction data stored in the storage memory 500. Accordingly the speed of the deep learning may be increased efficiently, thereby improving performance of a system and/or device that includes at least one of the storage controller 100, host 300, or storage memory 500, including a machine learning system, which may be used to provide for example, at least one of various services and/or applications, e.g., an image classify service, a user authentication service based on bio-information or biometric data, an advanced driver assistance system (ADAS) service, a voice assistant service, an automatic speech recognition (ASR) service, or the like, and may be performed, executed, or processed by the host device 300 and/or the storage controller 100. Accordingly, the efficiency and/or performance of such services and/or applications, and thus the performance of a system and/or device implementing such services and/or applications, may be improved based on the improved speed of the deep learning performed by a system and/or device that includes at least one of host 300, storage controller 100, or storage memory 500.

The buffer memory 130 may be embedded in the storage controller 100 as illustrated in FIG. 1. According to some example embodiments, the buffer memory 130 may be disposed out of (e.g., external to) the storage controller 100. A memory capacity of the buffer memory 130 may be lower than a memory capacity of the storage memory 500.

The host interface 170 may interface data transfer between the host 300 and the storage controller 100, and the storage memory interface 190 may interface data transfer between the storage controller 100 and the storage memory 500.

Some or all of the host 300, the storage controller 100, and/or the storage memory 500, and/or any portion thereof (e.g., storage processor 110 and/or the learning pattern processor 150) may include, may be included in, and/or may be implemented by processing circuitry such as hardware including logic circuits; a hardware/software combination such as a processor executing software; or a combination thereof. For example, the processing circuity more specifically may include, but is not limited to, a central processing unit (CPU), an arithmetic logic unit (ALU), a digital signal processor, a microcomputer, a field programmable gate array (FPGA), and programmable logic unit, a microprocessor, application-specific integrated circuit (ASIC), etc. In some example embodiments, the processing circuitry may include a non-transitory computer readable storage device, for example a solid state drive (SSD), storing a program of instructions, and a processor configured to execute the program of instructions to implement the functionality and/or methods performed by some or all of any of the storage controller 100, the host 300, and/or the storage memory 500, or any portion thereof (e.g., the learning pattern processor 150).

In some example embodiments, some or all of the host 300, the storage controller 100, and/or the storage memory 500, and/or any portion thereof may include, may be included in, and/or may implement an artificial neural network that is trained on a set of training data by, for example, a supervised, unsupervised, and/or reinforcement learning model, and wherein the processing circuitry may process a feature vector to provide output based upon the training. Such artificial neural networks may utilize a variety of artificial neural network organizational and processing models, such as convolutional neural networks (CNN), deconvolutional neural networks, recurrent neural networks (RNN) optionally including long short-term memory (LSTM) units and/or gated recurrent units (GRU), stacked neural networks (SNN), state-space dynamic neural networks (SSDNN), deep belief networks (DBN), generative adversarial networks (GANs), and/or restricted Boltzmann machines (RBM). Alternatively or additionally, the processing circuitry may include other forms of artificial intelligence and/or machine learning, such as, for example, linear and/or logistic regression, statistical clustering, Bayesian classification, decision trees, dimensionality reduction such as principal component analysis, and expert systems; and/or combinations thereof, including ensembles such as random forests.

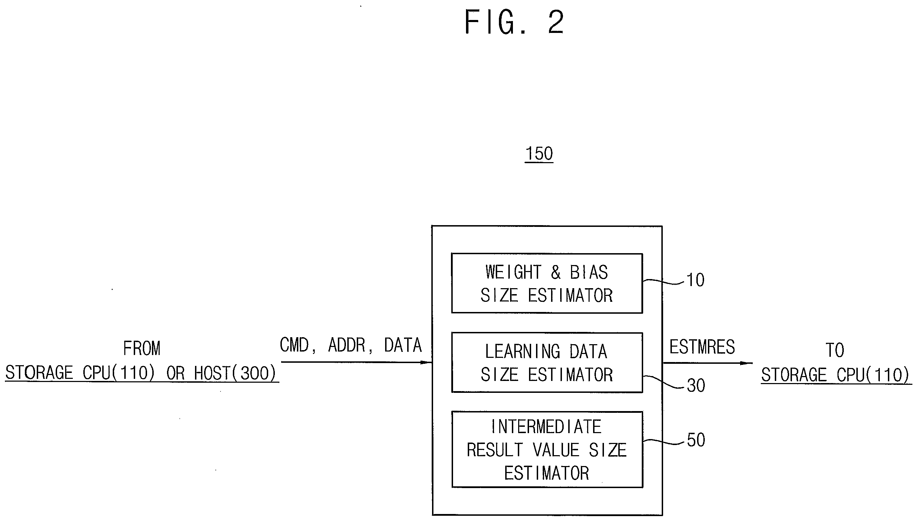

FIG. 2 is a block diagram illustrating some example embodiments of a learning pattern processor included in the storage controller of FIG. 1.

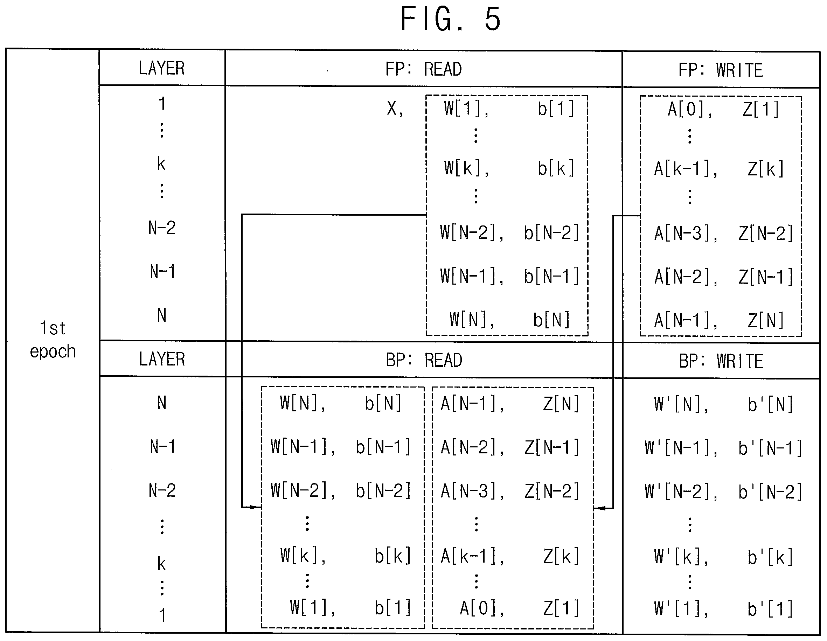

Referring to FIG. 2, a learning pattern processor 150 may include a weight and bias size estimator 10, a learning data size estimator 30 and an intermediate result value size estimator 50. Each of the weight and bias size estimator 10, the learning data size estimator 30 and the intermediate result value size estimator 50 will be described with reference to FIGS. 5, 6 and 7. The weight and bias size estimator 10, the learning data size estimator 30, and/or the intermediate result value size estimator 50 may include, may be included in, and/or may be implemented by processing circuitry such as hardware including logic circuits; a hardware/software combination such as a processor executing software; or a combination thereof. For example, the processing circuity more specifically may include, but is not limited to, a central processing unit (CPU), an arithmetic logic unit (ALU), a digital signal processor, a microcomputer, a field programmable gate array (FPGA), and programmable logic unit, a microprocessor, application-specific integrated circuit (ASIC), etc. In some example embodiments, the processing circuitry may include a non-transitory computer readable storage device, for example a solid state drive (SSD), storing a program of instructions, and a processor configured to execute the program of instructions to implement the functionality and/or methods performed by some or all of the weight and bias size estimator 10, the learning data size estimator 30, and/or the intermediate result value size estimator 50.

The learning pattern processor 150 estimates the request prediction data, that is expected to be requested by the host 300 per epoch to generate estimated result values ESTMRES of the request prediction data.

The learning pattern processor 150 receives an address corresponding to a read request or a write request from the storage processor 110 or the host 300, and generates the estimated result values ESTMRES using the address corresponding to the read request or the write request. The read request and the write request may be a combination of a command CMD and an address ADDR, and the write address may accompany write data DATA.

The learning pattern processor 150 transfers the estimated result values ESTMRES to the storage processor 110. Using the estimated result values ESTMRES, the storage processor 110 reads data, that is, the request prediction data, from the storage memory 500 and stores the request prediction data in the buffer memory 130 in advance before the host 300 issues the read request.

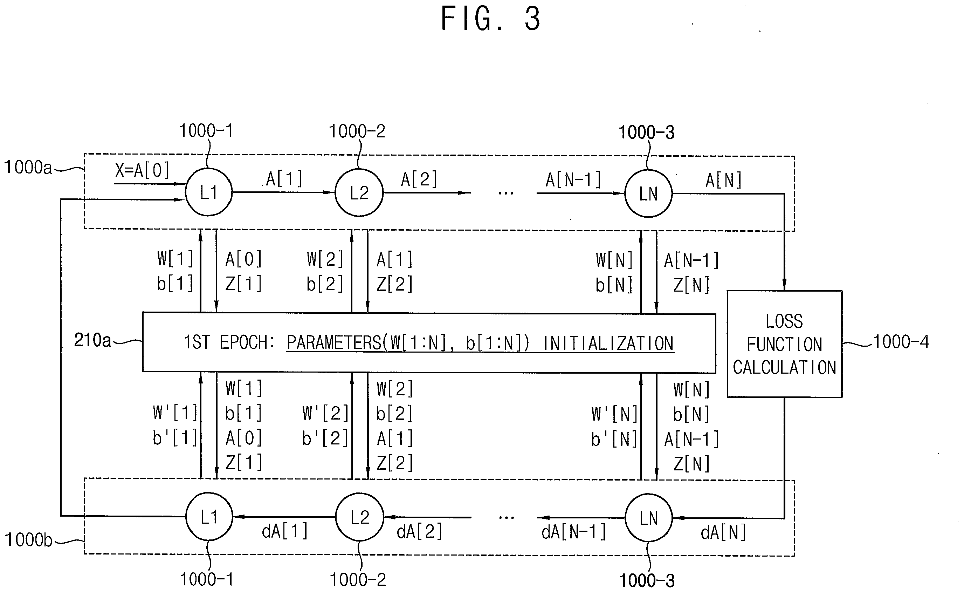

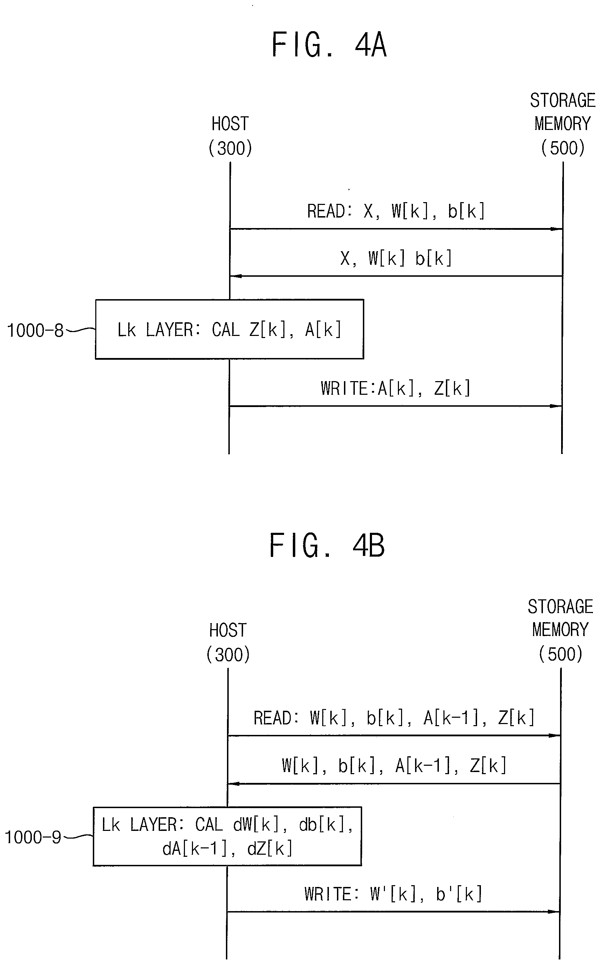

Hereinafter, processes of the deep learning are described with reference to FIGS. 3, 4A and 4B before describing example embodiments of generating the estimated result values ESTMRES.

FIG. 3 is a diagram for describing processes of deep learning performed by a storage system according to some example embodiments.

Referring to FIGS. 1 and 3, during a first epoch of the deep learning, initialization 210a of parameters may be performed and then the deep learning may proceed through a forward propagation (FP) 1000a, a loss function calculation 1000-4 and a backward propagation (BP) 1000b, which are repeated per epoch.

The initialization 210a may be performed by the storage processor 110, and the FP 1000a, the loss function calculation 1000-4 and the BP 1000b may be performed by the host 300.

The parameters may be repeatedly calculated and updated per epoch. In some example embodiments, the parameters may include weight values W[1:N] and bias values b[1:N] where N is a natural number greater than one.

During the FP 1000a, the host 300 may generate intermediate result values based on layer input data respectively applied to layers (L1~LN) 1000-1-1000-3. The layer input data during the FP 1000a may include learning data X, first intermediate result values A[1:N], the weight values W[1:N] and the bias values b[1:N]. In some example embodiments, the intermediate result values during the FP 1000a may include the first intermediate result values A[1:N] and second intermediate result values Z[1:N] and the second intermediate result values Z[1:N] may be generated based on the first intermediate result values A[1:N].

During the BP 1000b, the host 300 may generate intermediate result values based on layer input data respectively applied to layers 1000-1-1000-3. The layer input data during the BP 1000b may include deviations dA[N:1] of the first intermediate result values A[N:1]. In some example embodiments, the intermediate result values during the BP 1000b may include deviations dW[N:1] of the weight values W[N:1], deviations db[N:1] of the bias values b[N: 1], deviations dA[N-1:0] of the first intermediate result values A[N-1:0], and deviations dZ[N:1] of the second intermediate result values Z[N:1]. And the host 300 may generate weight values W[N:1] and deviation b[N:1] based on the deviations dW[N:1] of the weight values W[N:1] and deviations db[N:1] of the bias values b[N:1]

Meanwhile, during the deep learning process described above, the host 300 repeatedly issues a read request of a write request to the storage processor 110, and in this case, input/output relationship between the host 300 and the storage memory 500 will be described in detail.

FIG. 4A is a diagram illustrating communication between a host and a storage memory during a forward propagation (FP) and FIG. 4B is a diagram illustrating communication between the host and the storage memory during a backward propagation (BP).

FIGS. 4A and 4B illustrate input/output relationships between the host 300 and the storage memory 500 that occur in one layer Lk 1000-8 and/or 1000-9, where k is a natural number greater than 1 and less than N.

Referring to FIGS. 1, 3, and 4A, during the FP, the host 300 may issue a read request to the storage processor 110 to receive learning data X, weight value W[k], and bias value b[k]. The host 300 may calculate the first intermediate result value A[k] and the second intermediate result value Z[k] based on the learning data X, the weight value W[k], and the bias value b[k], and may store the first intermediate result value A[k] and the second intermediate result value Z[k] in the storage memory 500.

Referring to FIGS. 1, 3, and 4B, during the BP, the host 300 may issue a read request to the storage processor 110 to receive the weight value W[k], the bias value b[k], the first intermediate result value A[k-1] and the second intermediate result value Z[k]. The host 300 may calculate a deviation dW[k] of the weight value W[k], a deviation db[k] of the bias value b[k], a deviation dA[k-1] of the first intermediate value A[k-1] a deviation dZ[k] of the second intermediate value Z[k] based on the weight value W[k], the bias value b[k], the first intermediate value A[k-1], and the second intermediate value Z[k], and may store a updated weight value W'[k] and bias value b'[k] in the storage memory 500.

That is, the host 300 issues a read request to the storage processor 110 to receive the learning data X, the weight value W[k] and the bias value b[k] during the FP 1000a, and issues a read request to receive the weight value W[k], the bias value b[k], the first intermediate value A[k-1] and the second intermediate value Z[k] during the BP 1000b.

Since the host 300 repeatedly performs the deep learning as many as the predetermined number of epochs, the read request in the FP 1000a and the BP 1000b is also repeatedly issued as many as the number of epochs.

Here, if the storage controller 100 know the size of each of the data X, W[k], b[k], A[k-1] and Z[k] requested by the host 300 during the FP 1000a and the BP 1000b, the storage controller 100 may know addresses on the storage memory 500 in which each of the data X, W[k], b[k], A[k-1] and Z[k] is stored based on addresses corresponding to the first requested write request by the host 300. Therefore, the storage processor 110 reads data from the storage memory 500 in advance and store it in the buffer memory 130 before a read request is issued from the host 300. Hereinafter, a method of estimating the size of each of the data X, W[k], b[k], A[k-1] and Z[k] requested by the host 300 will be described.

FIG. 5 is a diagram for describing a method of estimating a size of learning data according to some example embodiments. It will be understood that the learning data size estimator 30 may be configured to estimate a size of the learning data X and may be configured to perform some or all of the method described with regard to at least FIG. 5.

Referring to FIGS. 2, 3, and 5, a first part W[1:N] and b[1:N] of data X, W[1:N] and b[1:N] requested by the host 300 to read during the FP 1000a are the same as a first part W[N:1] and b[N:1] of data W[N:1], b[N:1], A[N-1:0] and Z[N:1] requested by the host 300 to read during the BP 1000b. And all of data A[0:N-1] and Z[1:N] requested by the host 300 to write during the FP 1000a are the same as a second part A[N-1:0] and Z[N:1] of data W[N:1], b[N:1], A[N-1:0] and Z[N:1] requested by the host 300 to read during the BP 1000b.

Therefore, the size of the learning data X may be estimated by (e.g., based on) comparing all of data X, W[1:N], b[1:N], A[0:N-1] and Z[1:N] requested by the host 300 to read and all of data W[N:1], b[N:1], A[N-1:0] and Z[N:1] requested by the host 300 to read. Accordingly, the learning data size estimator 30 is configured to estimate a size of the learning data X based on comparing all data corresponding to a read request during a forward propagation (e.g., all of data X, W[1:N], b[1:N], A[0:N-1] and Z[1:N] requested by the host 300 to read during FP 1000a) and all data corresponding a read request during a backward propagation (e.g., all of data W[N:1], b[N:1], A[N-1:0] and Z[N: 1] requested by the host 300 to read during BP 1000b).

According to some example embodiments, a size of the learning data X may be estimated (e.g., by the learning data size estimator 30) based on a mismatched address range determined by (e.g., based on) comparing addresses corresponding to a read request and a write request by host 300 during the FP 1000a (e.g., a forward propagation) and the addresses corresponding to read request by host 300 during the BP 1000b (e.g., a backward propagation). Accordingly, the learning data size estimator 30 may be configured to estimate the size of the learning data X based on a mismatched address range determined based on comparing addresses corresponding to a write request and a read request during a forward propagation (e.g., request by host 300 during FP 1000a) and addresses corresponding to a write request and a read request during a backward propagation (e.g., request by host 300 during BP 1000b). And start and end time points of the FP 1000a and the BP 1000b are estimated based on a matched address range that is determined by comparing addresses corresponding to the read request and addresses corresponding to the write request. Accordingly, the learning data size estimator 30 may be configured to estimate start and end time points of the forward propagation (e.g., FP 1000a) and the backward propagation (e.g., BP 1000b) based on a matched address range that is determined (e.g., by the learning data size estimator 30) based on comparing an address corresponding to the read request during the forward propagation and an address corresponding to the read request during the backward propagation.

According to some example embodiments, estimation of the size of the learning data X may be performed by the learning data size estimator 30.

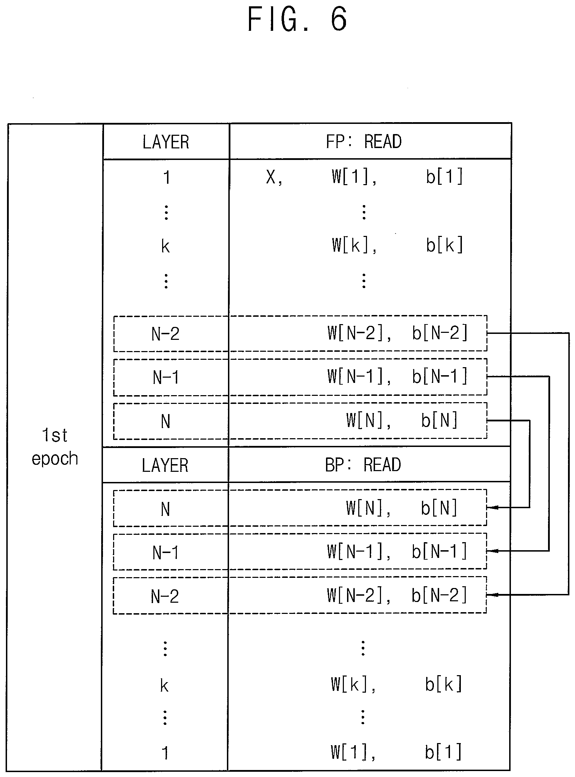

FIG. 6 is a diagram for describing a method of estimating a size of weight values and bias values according to some example embodiments. It will be understood that the weight and bias size estimator 10 may be configured to estimate a size of weight values and bias values and may be configured to perform some or all of the method described with regard to at least FIG. 6.

Referring to FIGS. 2, 3, 5, and 6, a first part W[1:N] and b[1:N] of data X, W[1:N] and b[1:N] requested by the host 300 to read during the FP 1000a are the same as a first part W[N:1] and b[N:1] of data W[N:1], b[N:1], A[N-1: 0] and Z[N:1] requested by the host 300 to read during the BP 1000b. Only the order of the request is reversed.

Therefore, the size of the weight values W[1:N] and bias values b[1:N] may be estimated by comparing all of data X, W[1:N] and b[1:N] requested by the host 300 to read during the FP 1000a and the first part W[N:1] and b[N:1] of data requested by the host 300 to read during the BP 1000b. Accordingly, the weight and bias size estimator 10 may be configured to estimate a size of weight values W[1:N] and bias values b[1:N] based on comparing all data corresponding to a read request during a forward propagation (e.g., all of data X, W[1:N] and b[1:N] requested by the host 300 to read during the FP 1000a) and a portion (e.g., a limited portion) of data corresponding to a read request during a backward propagation (e.g., the first part W[N:1] and b[N:1] of data requested by the host 300 to read during the BP 1000b), where it will be understood that a limited portion of data, in some example embodiments, is limited to only said portion data. According to some example embodiments, a size of the weight values W[1:N] and the bias values b[1:N] may be estimated based on a matched address range determined by comparing addresses corresponding to a read request by host 300 during the FP 1000a and the addresses corresponding to read request by the host 300 during the BP 1000b. Accordingly, the weight and bias size estimator 10 may be configured to estimate a size of weight values W[1:N] and bias values b[1:N] based on a matched address range determined (e.g., by the weight and bias size estimator 10) based on comparing an address corresponding to a read request during a forward propagation (e.g., FP 1000a) and an address corresponding to a read request during a backward propagation (e.g., BP 1000b). And the start and time points of the FP 1000a and the BP 1000b are estimated based on a matched address range determined by comparing addresses corresponding to the read request and addresses corresponding to the write request. Accordingly, the weight and bias size estimator 10 are configured to estimate start and end time points of the forward propagation (e.g., FP 1000a) and start and end time points of the backward propagation (e.g., BP 1000b) based on the matched address range.

According to some example embodiments, estimation of a size of the weight values and the bias values may be performed by the weight and bias size estimator 10.

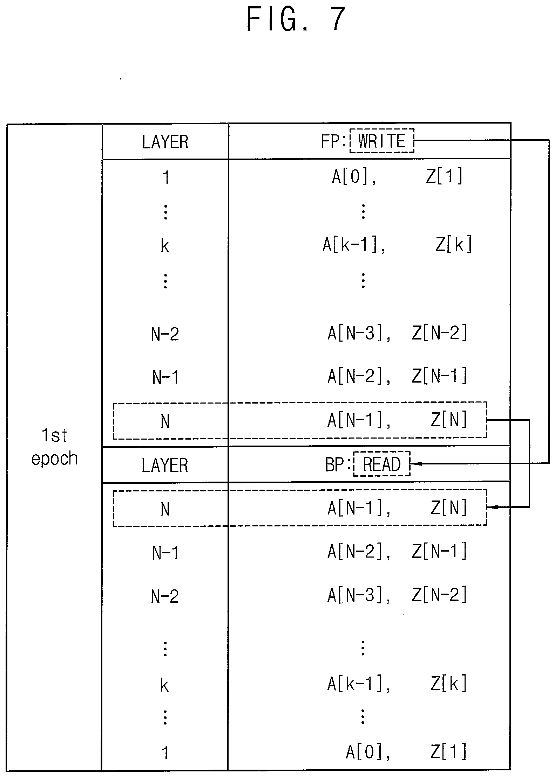

FIG. 7 is a diagram for describing a method of estimating a size of first intermediate result values and a size of second intermediate result values according to some example embodiments. It will be understood that the intermediate result value size estimator 50 may be configured to estimate a size of first intermediate result values and a size of second intermediate result values and may be configured to perform some or all of the method described with regard to at least FIG. 7.

Referring to FIGS. 2, 3, and 7, all of data A[0:N-1] and Z[1:N] requested by the host 300 to write during the FP 1000a are the same as the second part a[N-1:0, Z[N:1] of data W[N:1], b[N:1], A[N-1:0] and Z[N:1] requested by the host 300 to read during the BP 1000b. Only the order of the request is reversed.

Therefore, the size of the first immediate result values A[N-1:0] and the second immediate result values Z[N:1] may be estimated by comparing all of data A[0:N-1] and Z[1:N] requested by the host 300 to write during the FP 1000a and the second part A[N-1:0] and Z[N:1] of data W[N:1], b[N:1], A[N-1,0] and Z[N:1] requested by the host 300 to read during the BP 1000b. Accordingly, the intermediate result value size estimator 50 may be configured to estimate a size of the first immediate result values A[N-1:0] and the second immediate result values Z[N:1] based on comparing all data corresponding to a write request during a forward propagation (e.g., all of data A[0:N-1] and Z[1:N] requested by the host 300 to write during the FP 1000a) and a portion (e.g., limited portion) of data corresponding to a read request during a backward propagation (e.g., the second part A[N-1:0] and Z[N:1] of data W[N:1], b[N:1], A[N-1,0] and Z[N:1] requested by the host 300 to read during the BP 1000b). According to some example embodiments, a size of the first intermediate result values A[N-1:0] and the second intermediate result values Z[N:1] may be estimated based on a matched address range determined by comparing addresses corresponding to write request by host 300 during the FP 1000a and the addresses corresponding to write request by the host 300 during the BP 1000b. Accordingly, the intermediate result value size estimator 50 may be configured to estimate a size of the first immediate result values A[N-1:0] and the second immediate result values Z[N:1] based on comparing all data corresponding to a write request during a forward propagation (e.g., all of data A[0:N-1] and Z[1:N] requested by the host 300 to write during the FP 1000a) and a portion (e.g., limited portion) of data corresponding to a read request during a backward propagation (e.g., the second part A[N-1:0] and Z[N:1] of data W[N:1], b[N:1], A[N-1,0] and Z[N:1] requested by the host 300 to read during the BP 1000b). And the start and time points of the FP 1000a and the BP 1000b are estimated based on a matched address range determined by comparing addresses corresponding to the read request and addresses corresponding to the write request. Accordingly, the intermediate result value size estimator 50 is configured to estimate start and end time points of the backward propagation (e.g., BP 1000b) based on the matched address range based on comparing an address corresponding to the write request during the forward propagation (e.g., FP 1000a) and the address corresponding to the read request during the backward propagation (e.g., BP 1000b).

According to some example embodiments, the estimation of a size of the first intermediate result values and the second intermediate result values may be performed by the intermediate result value size estimator 50.

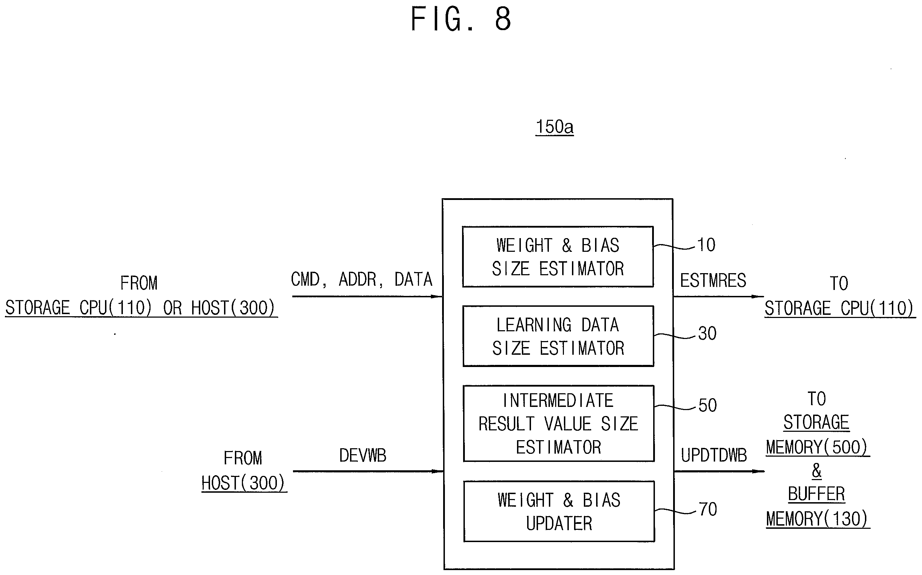

FIG. 8 is a diagram some example embodiments of a learning pattern processor included in the storage controller of FIG. 1.

Referring to FIGS. 1, 2, and 8, the learning pattern processor 150a may include a weight and bias size estimator 10, a learning data size estimator 30, an intermediate result value size estimator 50 and a weight and bias updater 70. The components having the same reference numerals in FIGS. 2 and 8 perform similar functions, and redundant descriptions will be omitted below. The weight and bias size estimator 10, the learning data size estimator 30, the intermediate result value size estimator 50 and/or the weight and bias updater 70 may include, may be included in, and/or may be implemented by processing circuitry such as hardware including logic circuits; a hardware/software combination such as a processor executing software; or a combination thereof. For example, the processing circuity more specifically may include, but is not limited to, a central processing unit (CPU), an arithmetic logic unit (ALU), a digital signal processor, a microcomputer, a field programmable gate array (FPGA), and programmable logic unit, a microprocessor, application-specific integrated circuit (ASIC), etc. In some example embodiments, the processing circuitry may include a non-transitory computer readable storage device, for example a solid state drive (SSD), storing a program of instructions, and a processor configured to execute the program of instructions to implement the functionality and/or methods performed by some or all of the weight and bias size estimator 10, the learning data size estimator 30, the intermediate result value size estimator 50, and/or the weight and bias updater 70.

The learning pattern processor 150a receives an address corresponding to a read request or a write request from the storage processor 110 or the host 300, and generates the estimated result values ESTMRES using the address corresponding to the read request or the write request. The read request and the write request may be a combination of a command CMD and an address ADDR, and the write address may accompany write data DATA.

The learning pattern processor 150a transfers the estimated result values ESTMRES to the storage processor 110. Using the estimated result values ESTMRES, the storage processor 110 reads data, that is, the request prediction data, from the storage memory 500 and stores the request prediction data in the buffer memory 130 in advance before the host 300 issues the read request.

The learning pattern processor 150a may receive a deviations DEVWB weight values and bias values from the host 300. Using the deviations DEVWB, the learning pattern processor may generate a updated weight values and bias values UPDTDWB. Hereinafter, the process of performing the deep learning will be described to describe the process in which the learning pattern processor 150a generates the updated weight and bias values UPDTDWB.

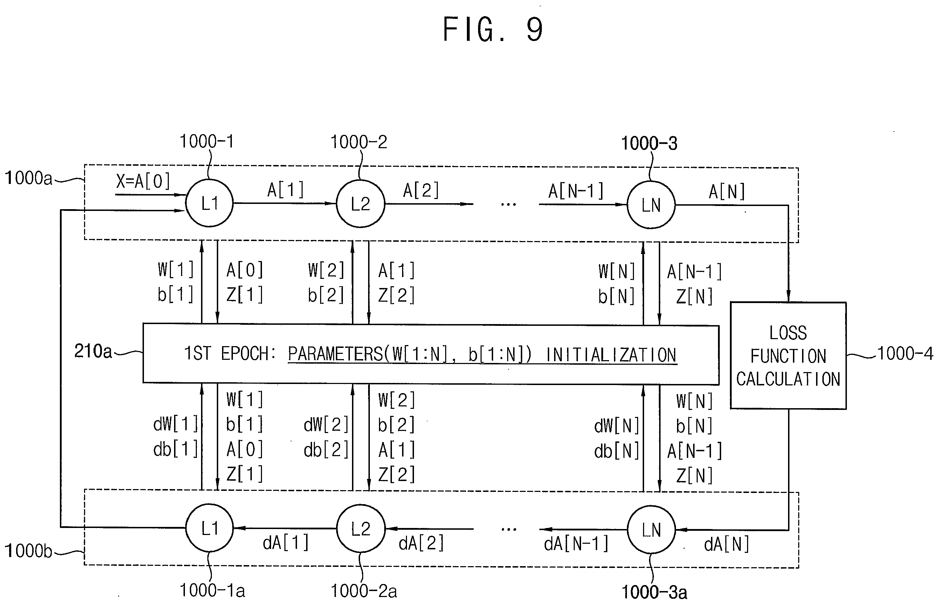

FIG. 9 is a diagram for describing processes of deep learning performed by the storage controller of FIG. 8.

Referring to FIGS. 1 and 9, during a first epoch of the deep learning, initialization 210a of parameters may be performed and then the deep learning may proceed through a forward propagation (FP) 1000a, a loss function calculation 1000-4 and a backward propagation (BP) 1000b, which are repeated per epoch.

The initialization 210a may be performed by the storage processor 110, and the FP 1000a, the loss function calculation 1000-4 and the BP 1000b may be performed by the host 300.

The parameters may be repeatedly calculated and updated per epoch. In some example embodiments, the parameters may include weight values W[1:N] and bias values b[1N] where N is a natural number greater than one.

During the FP 1000a, the host 300 may generate intermediate result values based on layer input data respectively applied to layers (L1~LN) 1000-1-1000-3. The layer input data during the FP 1000a may include learning data X, first intermediate result values A[1:N], the weight values W[1:N] and the bias values b[1:N]. In some example embodiments, the intermediate result values during the FP 1000a may include the first intermediate result values A[1:N] and second intermediate result values Z[1:N] and the second intermediate result values Z[1:N] may be generated based on the first intermediate result values A[1:N].

During the BP 1000b, the host 300 may generate intermediate result values based on layer input data respectively applied to layers 1000-1-1000-3. The layer input data during the BP 1000b may include deviations dA[N:1] of the first intermediate result values A[N:1]. In some example embodiments, the intermediate result values during the BP 1000b may include deviations dW[N: 1] of the weight values W[N:1], deviations db[N:1] of the bias values b[N: 1], deviations dA[N-1:0] of the first intermediate result values A[N-1:0], and deviations dZ[N:1] of the second intermediate result values Z[N:1]. And the host 300 may generate weight values W[N:1] and deviation b[N:1] based on the deviations dW[N:1] of the weight values W[N:1] and deviations db[N:1] of the bias values b[N:1].

The weight and bias updater 70 may update the weight values W[N:1] and the bias values b[N: 1] based on the deviations dW[N:1] of the weight values W[N:1] and deviations db[N: 1] of the bias values b[N:1]. Accordingly, it will be understood that the weight and bias updater 70 may be configured to receive deviations dW[N:1] of the weight values W[N:1] and deviations db[N:1] of the bias values b[N:1] from the host 300 to generate updated weight values W[N:1] and updated bias values b [N: 1] based on the deviations dW[N:1] of the weight values W[N:1] and deviations db[N:1] of the bias values b[N:1].

The Update may be performed by calculating each of the weight values W[N:1] and bias values b[N:1] to each of the deviations b[N:1] of the weight values W[N:1] and the deviation b[N:1] of the bias values b[N:1].

According to some example embodiments, the calculation may be one of addition, subtraction, or other operations, but the scope of the present inventive concepts are not limited thereto. For example, the other operations may include a differential operation. According to some example embodiments, the calculation may be previously determined by any one of the addition, the subtraction, or the other operations before the storage system performs the deep learning.

According to some example embodiments, the Meanwhile, during the deep learning process described above, the host 300 repeatedly issues a read request of a write request to the storage processor 110, and in this case, input/output relationship between the host 300 and the storage memory 500 will be described in detail.

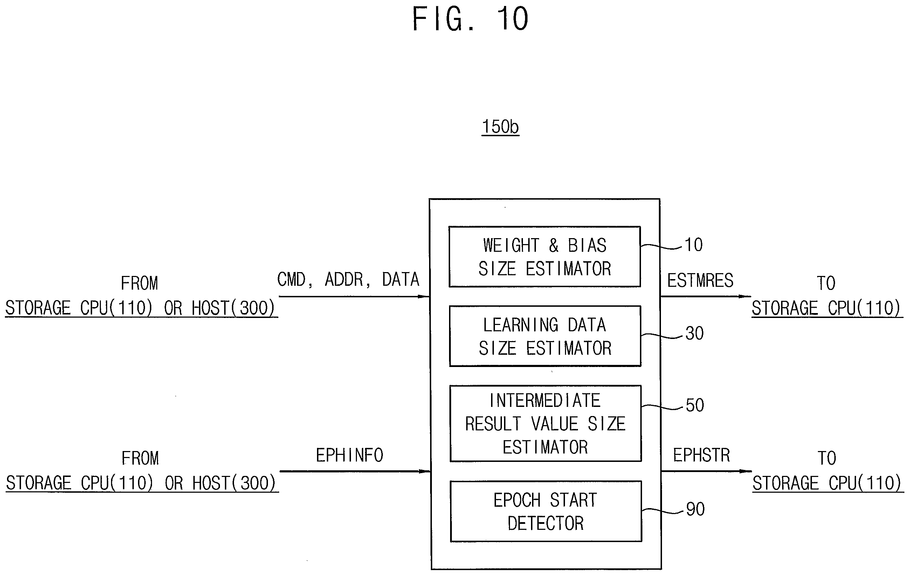

FIG. 10 is a diagram some example embodiments of a learning pattern processor included in the storage controller of FIG. 1.

Referring FIGS. 1, 2, and 10, the learning pattern processor 150b may include a weight and bias size estimator 10, a learning data size estimator 30, an intermediate result value size estimator 50, and an epoch start detector 90. The components having the same reference numerals in FIGS. 2 and 10 perform similar functions, and redundant descriptions will be omitted below. The weight and bias size estimator 10, the learning data size estimator 30, the intermediate result value size estimator 50, the weight and bias updater 70, and/or the epoch start detector 90 may include, may be included in, and/or may be implemented by processing circuitry such as hardware including logic circuits; a hardware/software combination such as a processor executing software; or a combination thereof. For example, the processing circuity more specifically may include, but is not limited to, a central processing unit (CPU), an arithmetic logic unit (ALU), a digital signal processor, a microcomputer, a field programmable gate array (FPGA), and programmable logic unit, a microprocessor, application-specific integrated circuit (ASIC), etc. In some example embodiments, the processing circuitry may include a non-transitory computer readable storage device, for example a solid state drive (SSD), storing a program of instructions, and a processor configured to execute the program of instructions to implement the functionality and/or methods performed by some or all of the weight and bias size estimator 10, the learning data size estimator 30, the intermediate result value size estimator 50, the weight and bias updater 70, and/or the epoch start detector 90. For example, it will be understood that a learning pattern processor according to any of the example embodiments (e.g., learning pattern processors 150, 150a, and/or 150b) may include processing circuitry configured to implement the functionality of one or more, or all of the weight and bias size estimator 10, the learning data size estimator 30, the intermediate result value size estimator 50, the weight and bias updater 70, and/or the epoch start detector 90 described herein to be included in the learning pattern processor according to any of the example embodiments. For example, the learning pattern processor according to any of the example embodiments may include processing circuitry, for example a memory storing a program of instructions and a processor configured to execute the program of instructions to implement the functionality of any of the weight and bias size estimator 10, the learning data size estimator 30, the intermediate result value size estimator 50, the weight and bias updater 70, and/or the epoch start detector 90 described herein.

The epoch start detector 90 may detect a start point of each epoch during the deep learning. According to some example embodiments, when the deep learning is performed by a conventional storage system and is stopped in the middle, and is continuously performed by the storage system according to some example embodiments of the present inventive concepts, the epoch start detector 90 may detect a start point of newly proceeding epoch. According to some example embodiments, the start point is estimated based on a matched address range determined by comparing addresses corresponding to a read request and addresses corresponding to a write request. According to some example embodiments, at least one epoch may be performed between the stopped point and the start point of the newly proceeding epoch.

When the start point of the epoch is detected, the epoch start detector 90 may generate an epoch start detection signal DPHSTR and may be transmitted the epoch start detection signal DPHSTR to the storage processor 110.

The learning pattern processor 150b receives an address corresponding to a read request or a write request from the storage processor 110 or the host 300, and generates the estimated result values ESTMRES using the address corresponding to the read request or the write request. The read request and the write request may be a combination of a command CMD and an address ADDR, and the write address may accompany write data DATA.

The learning pattern processor 150b transfers the estimated result values ESTMRES to the storage processor 110. Using the estimated result values ESTMRES, the storage processor 110 reads data, that is, the request prediction data, from the storage memory 500 and stores the request prediction data in the buffer memory 130 in advance before the host 300 issues the read request.

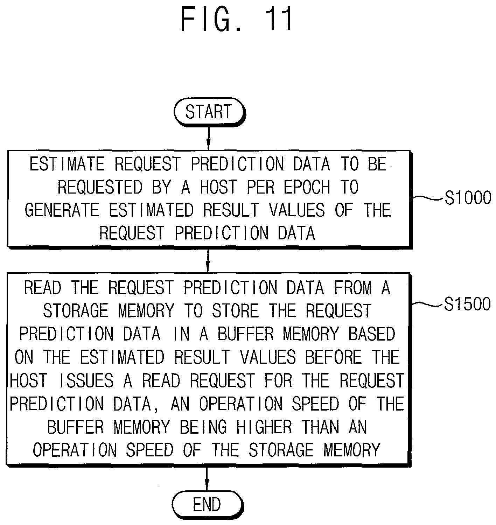

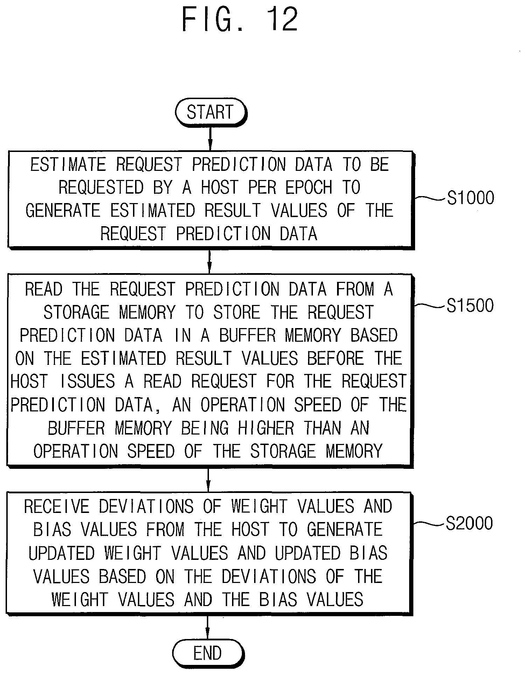

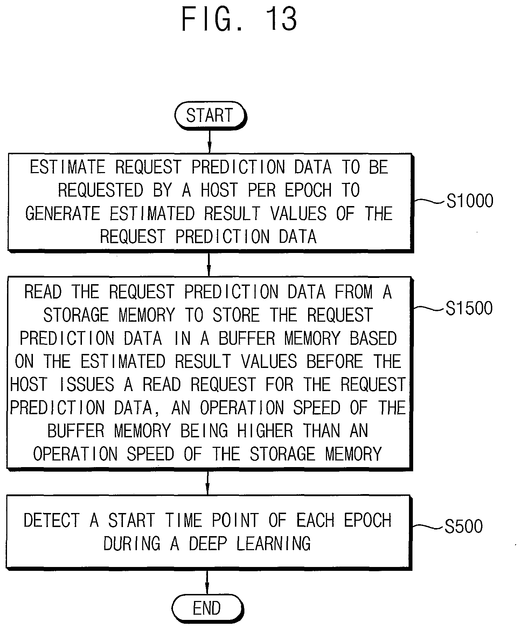

FIGS. 11, 12, and 13 are flow charts illustrating a method of operating a storage controller according to some example embodiments. It will be understood that the operations shown in FIGS. 11, 12, and 13 may be performed by some or all of any of the devices, systems, or the like described herein, including, for example, the storage controller 100 shown in FIG. 1.

Referring to FIGS. 1, 2, and 11, a storage controller 100 estimates the request prediction data, that is expected to be requested by the host 300 per epoch to generate estimated result values ESTMRES of the request prediction data (S1000). The learning pattern processor 150 receives an address corresponding to a read request or a write request from the storage processor 110 or the host 300, and generates the estimated result values ESTMRES using the address corresponding to the read request or the write request. The read request and the write request may be a combination of a command CMD and an address ADDR, and the write address may accompany write data DATA.

According to some example embodiments, the size of the learning data X may be estimated by (e.g., based on) comparing all of data X, W[1:N], b[1:N], A[0:N-1] and Z[1:N] requested by the host 300 to read and all of data W[N:1], b[N:1], A[N-1:0] and Z[N:1] requested by the host 300 to read.

According to some example embodiments, a size of the learning data X may be estimated based on a mismatched address range determined by (e.g., based on) comparing addresses corresponding to a read request and a write request by host 300 during the FP 1000a and the addresses corresponding to read request by host 3000 during the BP 1000b. And start and end time points of the FP 1000a and the BP 1000b are estimated based on a matched address range determined by comparing addresses corresponding to the read request and addresses corresponding to the write request.

According to some example embodiments, the size of the weight values W[1:N] and bias values b[1:N] may be estimated by comparing all of data X, W[1:N] and b[1:N] requested by the host 300 to read during the FP 1000a and the first part W[N:1] and b[N:1] of data requested by the host 300 to read during the BP 1000b. According to some example embodiments, a size of the weight values W[1:N] and the bias values b[1:N] may be estimated based on a matched address range determined by comparing addresses corresponding to a read request by host 300 during the FP 1000a and the addresses corresponding to read request by the host 300 during the BP 1000b. And the start and time points of the FP 1000a and the BP 1000b are estimated based on a matched address range determined by comparing addresses corresponding to the read request and addresses corresponding to the write request.

According to some example embodiments, the size of the first immediate result values A[N-1:0] and the second immediate result values Z[N:1] may be estimated by comparing all of data A[0:N-1] and Z[1:N] requested by the host 300 to write during the FP 1000a and the second part A[N-1:0] and Z[N:1] of data W[N:1], b[N:1], A[N-1,0] and Z[N:1] requested by the host 300 to read during the BP 1000b. According to some example embodiments, a size of the first intermediate result values A[N-1:0] and the second intermediate result values Z[N:1] may be estimated based on a matched address range determined by comparing addresses corresponding to write request by host 300 during the FP 1000a and the addresses corresponding to read request by the host 300 during the BP 1000b. And the start and time points of the FP 1000a and the BP 1000b are estimated based on a matched address range determined by comparing addresses corresponding to the read request and addresses corresponding to the write request.

The storage controller 100, based on the estimated result values, reads request prediction data from the storage memory 500 to store the request prediction data in the buffer memory 130, in advance, before the host issues a read request for the request prediction data (S1500).

Referring to FIGS. 1, 2, 10, and 12, the storage controller 100 estimates the request prediction data, that is expected to be requested by the host 300 per epoch to generate estimated result values ESTMRES of the request prediction data (S1000). The storage controller 100, based on the estimated result values, reads request prediction data from the storage memory 500 to store the request prediction data in the buffer memory 130, in advance, before the host issues a read request for the request prediction data (S1500). The storage controller 100 may receive a deviations DEVWB weight values and bias values from the host 300. Using the deviations DEVWB, the storage controller 100 may generate a updated weight values and bias values UPDTDWB.

The storage controller 100 may update the weight values W[N:1] and the bias values b[N: 1] based on the deviations dW[N:1] of the weight values W[N:1] and deviations db[N:1] of the bias values b[N:1]. The Update may be performed by calculating each of the weight values W[N:1] and bias values b[N:1] to each of the deviations b[N:1] of the weight values W[N:1] and the deviation b[N:1] of the bias values b[N:1]. According to some example embodiments, the calculation may be one of addition, subtraction, or other operations, but the scope of the present inventive concepts are not limited thereto. For example, the other operations may include a differential operation. According to some example embodiments, the calculation may be previously determined by any one of the addition, the subtraction, or the other operations before the storage system performs the deep learning.

Referring to FIGS. 1, 2, 12, and 13, the storage controller 100, before S1000, may detect a start point of the epoch during the deep learning (S500). According to some example embodiments, when the deep learning is performed by a conventional storage system and is stopped in the middle, and is continuously performed by the storage system according to some example embodiments of the present inventive concepts, the storage controller 100 may detect a start point of newly proceeding epoch. According to some example embodiments, the start point is estimated based on a matched address range determined by comparing addresses corresponding to a read request and addresses corresponding to a write request. According to some example embodiments, at least one epoch may be performed between the stopped point and the start point of the newly proceeding epoch.

When the start point of the epoch is detected, the storage controller 100 may generate an epoch start detection signal DPHSTR and may be transmitted the epoch start detection signal DPHSTR to the storage processor 110.

The storage controller 100 receives an address corresponding to a read request or a write request from the host 300, and generates the estimated result values ESTMRES using the address corresponding to the read request or the write request. The read request and the write request may be a combination of a command CMD and an address ADDR, and the write address may accompany write data DATA.

The storage controller 100 transfers the estimated result values ESTMRES to the storage processor 110. Using the estimated result values ESTMRES, the storage processor 110 reads data, that is, the request prediction data, from the storage memory 500 and stores the request prediction data in the buffer memory 130 in advance before the host 300 issues the read request.

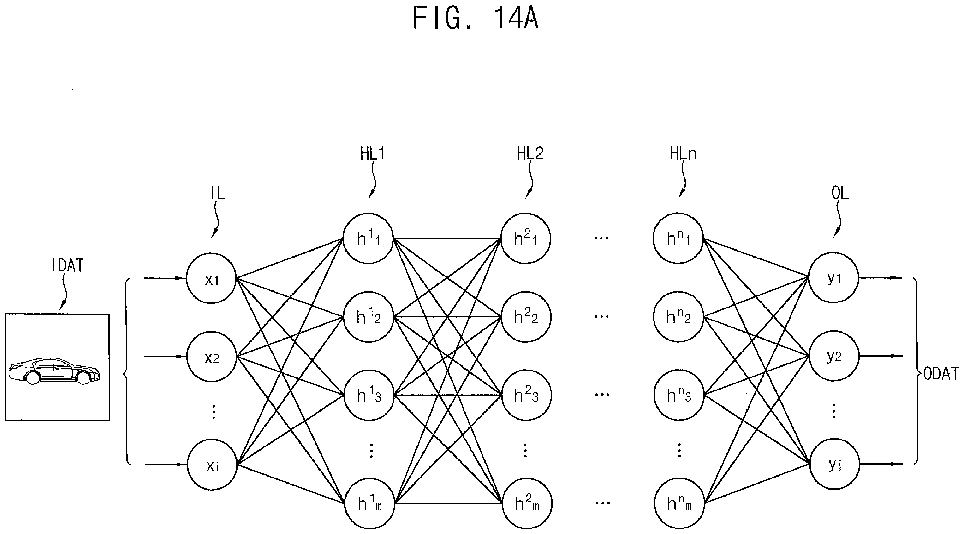

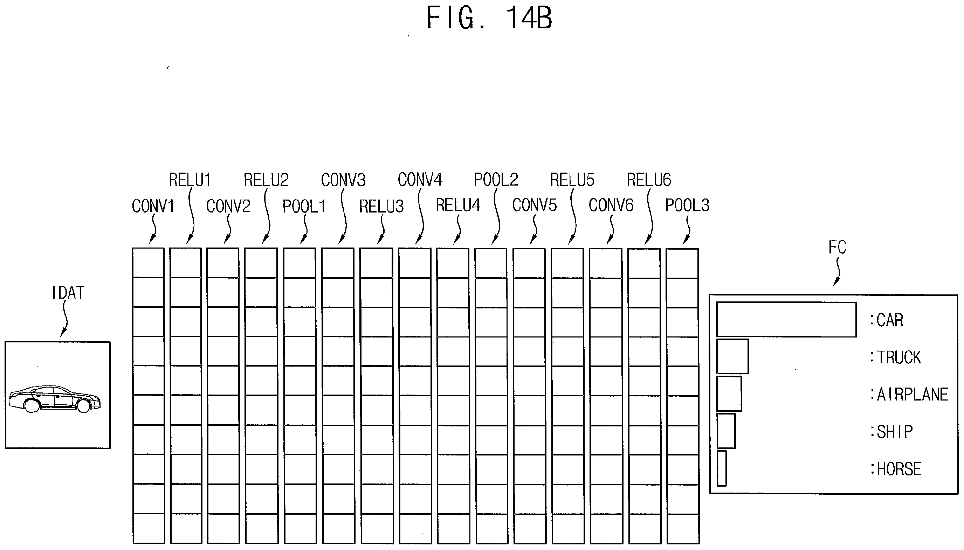

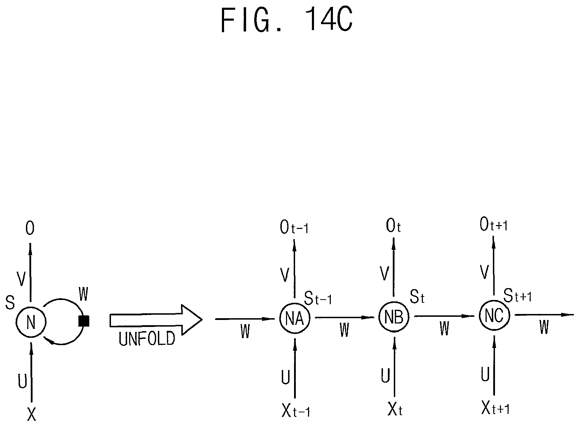

FIGS. 14A, 14B and 14C are diagrams for describing examples of a network structure that is driven by an AI function implemented in a storage device according to some example embodiments.

Referring to FIG. 14A, a general neural network may include an input layer IL, a plurality of hidden layers HL1, HL2, ..., HLn and an output layer OL. A general neural network may include various neural network systems and/or machine learning systems, e.g., an artificial neural network (ANN) system, a convolutional neural network (CNN) system, a deep neural network (DNN) system, a deep learning system, or the like. Such machine learning systems may include a variety of learning models, such as convolutional neural networks (CNN), deconvolutional neural networks, recurrent neural networks (RNN) optionally including long short-term memory (LSTM) units and/or gated recurrent units (GRU), stacked neural networks (SNN), state-space dynamic neural networks (SSDNN), deep belief networks (DBN), generative adversarial networks (GANs), and/or restricted Boltzmann machines (RBM). Alternatively or additionally, such machine learning systems may include other forms of machine learning models, such as, for example, linear and/or logistic regression, statistical clustering, Bayesian classification, decision trees, dimensionality reduction such as principal component analysis, and expert systems; and/or combinations thereof, including ensembles such as random forests. Such machine learning models may also be used to provide for example, at least one of various services and/or applications, e.g., an image classify service, a user authentication service based on bio-information or biometric data, an advanced driver assistance system (ADAS) service, a voice assistant service, an automatic speech recognition (ASR) service, or the like, and may be performed, executed, implemented, processed, or the like by some or all of any of the systems and/or devices described herein, including some or all of the host device 300, the storage controller 100, and/or the storage memory 500.

Such models may be implemented with software or hardware and be a model based on at least one of an artificial neural network (ANN) model, a multi-layer perceptrons (MLPs) model, a convolutional neural network (CNN) model, a deconvolutional neural network, a decision tree model, a random forest model, an Adaboost (adaptive boosting) model, a multiple regression analysis model, a logistic regression model, recurrent neural networks (RNN) optionally including long short-term memory (LSTM) units and/or gated recurrent units (GRU), stacked neural networks (SNN), state-space dynamic neural networks (SSDNN), deep belief networks (DBN), generative adversarial networks (GANs), and/or restricted Boltzmann machines (RBM). Alternatively or additionally, such models may include other forms of artificial intelligence models, such as, for example, linear and/or logistic regression, statistical clustering, Bayesian classification, decision trees, dimensionality reduction such as principal component analysis, and expert systems a random sample consensus (RANSAC) model; and/or combinations thereof. Examples of such models are not limited thereto.

The input layer IL may include i input nodes x₁, x₂, ..., xᵢ, where i is a natural number. Input data (e.g., vector input data) IDAT whose length is i may be input to the input nodes x₁, x₂, ..., xᵢ such that each element of the input data IDAT is input to a respective one of the input nodes x₁, x₂, ..., xᵢ.

The plurality of hidden layers HL1, HL2, ..., HLn may include n hidden layers, where n is a natural number, and may include a plurality of hidden nodes h¹₁, h¹₂, h¹₃, ..., h¹ₘ, h²₁, h²₂, h²₃, ..., h²ₘ, hⁿ₁, hⁿ₂, hⁿ₃, ..., hⁿₘ. For example, the hidden layer HL1 may include m hidden nodes h¹₁, h¹₂, h¹₃, ..., h¹ₘ, the hidden layer HL2 may include m hidden nodes h²₁, h²₂, h²₃, ..., h²ₘ, and the hidden layer HLn may include m hidden nodes hⁿ₁, hⁿ₂, hⁿ₃, ..., hⁿₘ, where m is a natural number.

The output layer OL may include j output nodes y₁, y₂, ..., yⱼ, where j is a natural number. Each of the output nodes y₁, y₂, ..., yⱼ may correspond to a respective one of classes to be categorized. The output layer OL may output output values (e.g., output data ODAT, which may include class scores or simply scores) associated with the input data IDAT for each of the classes. The output layer OL may be referred to as a fully-connected layer and may indicate, for example, a probability that the input data IDAT corresponds to a car.

A structure of the neural network illustrated in FIG. 14A may be represented by information on branches (or connections) between nodes illustrated as lines, and a weighted value assigned to each branch, which is not illustrated. Nodes within one layer may not be connected to one another, but nodes of different layers may be fully or partially connected to one another.

Each node (e.g., the node h¹₁) may receive an output of a previous node (e.g., the node x₁), may perform a computing operation, computation or calculation on the received output, and may output a result of the computing operation, computation or calculation as an output to a next node (e.g., the node h²₁). Each node may calculate a value to be output by applying the input to a specific function, e.g., a nonlinear function.

Generally, the structure of the neural network is set in advance, and the weighted values for the connections between the nodes are set appropriately using data having an already known answer of which class the data belongs to. The data with the already known answer is referred to as "training data," and a process of determining the weighted value is referred to as "training." The neural network "learns" during the training process. A group of an independently trainable structure and the weighted value is referred to as a "model," and a process of predicting, by the model with the determined weighted value, which class the input data belongs to, and then outputting the predicted value, is referred to as a "testing" process.

The general neural network illustrated in FIG. 14A may not be suitable for handling input image data (or input sound data) because each node (e.g., the node h¹₁) is connected to all nodes of a previous layer (e.g., the nodes x₁, x₂, ..., xᵢ included in the layer IL) and then the number of weighted values drastically increases as the size of the input image data increases. Thus, a CNN, which is implemented by combining the filtering technique with the general neural network, has been researched such that two-dimensional image (e.g., the input image data) is efficiently trained by the CNN.

Referring to FIG. 14B, a CNN may include a plurality of layers CONV1, RELU1, CONV2, RELU2, POOL1, CONV3, RELU3, CONV4, RELU4, POOL2, CONV5, RELU5, CONV6, RELU6, POOL3 and FC.

Unlike the general neural network, each layer of the CNN may have three dimensions of width, height and depth, and thus data that is input to each layer may be volume data having three dimensions of width, height and depth. For example, if an input image in FIG. 14B has a size of 32 widths (e.g., 32 pixels) and 32 heights and three color channels R, G and B, input data IDAT corresponding to the input image may have a size of 32*32*3. The input data IDAT in FIG. 14B may be referred to as input volume data or input activation volume.

Each of convolutional layers CONV1, CONV2, CONV3, CONV4, CONV5 and CONV6 may perform a convolutional operation on input volume data. In an image processing, the convolutional operation represents an operation in which image data is processed based on a mask with weighted values and an output value is obtained by multiplying input values by the weighted values and adding up the total multiplied values. The mask may be referred to as a filter, window or kernel.

Particularly, parameters of each convolutional layer may comprise a set of learnable filters. Every filter may be small spatially (along width and height), but may extend through the full depth of an input volume. For example, during the forward pass, each filter may be slid (more precisely, convolved) across the width and height of the input volume, and dot products may be computed between the entries of the filter and the input at any position. As the filter is slid over the width and height of the input volume, a two-dimensional activation map that gives the responses of that filter at every spatial position may be generated. As a result, an output volume may be generated by stacking these activation maps along the depth dimension. For example, if input volume data having a size of 32*32*3 passes through the convolutional layer CONV1 having four filters with zero-padding, output volume data of the convolutional layer CONV1 may have a size of 32^{∗}32^{∗}12 (e.g., a depth of volume data increases).

Each of RELU layers RELU1, RELU2, RELU3, RELU4, RELU5 and RELU6 may perform a rectified linear unit (RELU) operation that corresponds to an activation function defined by, e.g., a function f(x)=max(0, x) (e.g., an output is zero for all negative input x). For example, if input volume data having a size of 32^{∗}32^{∗}12 passes through the RELU layer RELU1 to perform the rectified linear unit operation, output volume data of the RELU layer RELU1 may have a size of 32^{∗}32^{∗}12 (e.g., a size of volume data is maintained).

Each of pooling layers POOL1, POOL2 and POOL3 may perform a down-sampling operation on input volume data along spatial dimensions of width and height. For example, four input values arranged in a 2*2 matrix formation may be converted into one output value based on a 2*2 filter. For example, a maximum value of four input values arranged in a 2*2 matrix formation may be selected based on 2*2 maximum pooling, or an average value of four input values arranged in a 2*2 matrix formation may be obtained based on 2*2 average pooling. For example, if input volume data having a size of 32^{∗}32^{∗}12 passes through the pooling layer POOL1 having a 2*2 filter, output volume data of the pooling layer POOL1 may have a size of 16^{∗}16^{∗}12 (e.g., width and height of volume data decreases, and a depth of volume data is maintained).

Typically, one convolutional layer (e.g., CONV1) and one RELU layer (e.g., RELU1) may form a pair of CONV/RELU layers in the CNN, pairs of the CONV/RELU layers may be repeatedly arranged in the CNN, and the pooling layer may be periodically inserted in the CNN, thereby reducing a spatial size of image and extracting a characteristic of image.

An output layer or a fully-connected layer FC may output results (e.g., output data ODAT, which may include class scores) of the input volume data IDAT for each of the classes. For example, the input volume data IDAT corresponding to the two-dimensional image may be converted into an one-dimensional matrix or vector as the convolutional operation and the down-sampling operation are repeated. For example, the fully-connected layer FC may represent probabilities that the input volume data IDAT corresponds to a car, a truck, an airplane, a ship and a horse.

The types and number of layers included in the CNN may not be limited to an example described with reference to FIG. 14B and may be changed according to some example embodiments. In addition, although not illustrated in FIG. 14B, the CNN may further include other layers such as a softmax layer for converting score values corresponding to predicted results into probability values, a bias adding layer for adding at least one bias, or the like.

Referring to FIG. 14C, a RNN may include a repeating structure using a specific node or cell N illustrated on the left side of FIG. 14C.

A structure illustrated on the right side of FIG. 14C may represent that a recurrent connection of the RNN illustrated on the left side is unfolded (or unrolled). The term "unfolded" means that the network is written out or illustrated for the complete or entire sequence including all nodes NA, NB and NC. For example, if the sequence of interest is a sentence of 3 words, the RNN may be unfolded into a 3-layer neural network, one layer for each word (e.g., without recurrent connections or without cycles).

In the RNN in FIG. 14C, X represents an input of the RNN. For example, Xt may be an input at time step t, and Xₜ₋₁ and Xₜ₊₁ may be inputs at time steps t-1 and t+1, respectively.

In the RNN in FIG. 14C, S represents a hidden state. For example, St may be a hidden state at the time step t, and Sₜ₋₁ and Sₜ₊₁ may be hidden states at the time steps t-1 and t+1, respectively. The hidden state may be calculated based on a previous hidden state and an input at a current step. For example, Sₜ=f(UXₜ+WSₜ₋₁). For example, the function f may be usually a nonlinearity function such as tanh or RELU. S₋₁, which is required to calculate a first hidden state, may be typically initialized to all zeroes.

In the RNN in FIG. 14C, O represents an output of the RNN. For example, Ot may be an output at the time step t, and Oₜ₋₁ and Oₜ₊₁ may be outputs at the time steps t-1 and t+1, respectively. For example, if it is required to predict a next word in a sentence, it would be a vector of probabilities across a vocabulary. For example, Ot=softmax(VSt).

In the RNN in FIG. 14C, the hidden state may be a "memory" of the network. In other words, the RNN may have a "memory" which captures information about what has been calculated so far. The hidden state St may capture information about what happened in all the previous time steps. The output Ot may be calculated solely based on the memory at the current time step t. In addition, unlike a traditional neural network, which uses different parameters at each layer, the RNN may share the same parameters (e.g., U, V and W in FIG. 14C) across all time steps. This may represent the fact that the same task may be performed at each step, just with different inputs. This may greatly reduce the total number of parameters required to be trained or learned, thereby improving efficiency of the neural network and thus improving efficiency and/or performance of services and/or applications that are performed, executed or processed by the neural network system described with reference to FIGS. 14A, 14B and 14C. Accordingly, the efficiency and/or performance of one or more devices and/or systems including said services and/or applications may be improved.

In some example embodiments, at least one of various services and/or applications, e.g., an image classify service, a user authentication service based on bio-information or biometric data, an advanced driver assistance system (ADAS) service, a voice assistant service, an automatic speech recognition (ASR) service, or the like, may be performed, executed or processed by the neural network system described with reference to FIGS. 14A, 14B and 14C. In some example embodiments, said neural network system may be implemented at least in part by some or all of the storage controller 100, host 300 and/or storage memory 500 as described herein according to any of the example embodiments, where deep learning by said system may be improved in speed and/or efficiency based on including some or all of the storage controller 100, host 300 and/or storage memory 500 as described herein according to any of the example embodiments, including the operations and/or functionality performed by any portions thereof.

Accordingly, one or more devices and/or systems including the storage controller 100, host 300 and/or storage memory 500 as described herein according to any of the example embodiments may partially or entirely implement a neural network system that may implement a service and/or application (e.g., an image classify service, a user authentication service based on bio-information or biometric data, an advanced driver assistance system (ADAS) service, a voice assistant service, an automatic speech recognition (ASR) service, or the like), and the functionality of said services and/or applications may thus be improved based on being implemented by a neural network for which deep learning may be performed more quickly and efficiently based on including the storage controller 100, host 300 and/or storage memory 500 as described herein according to any of the example embodiments. Thus, systems and/or devices implementing said services and/or applications (e.g., a host 300 that is a vehicle implementing an ADAS) may have improved responsiveness and/or adaptability to changing environments and thus may be configured to generate output signals (e.g., output signals generated by an ADAS that may cause a vehicle host 300 to be responsively navigated and/or driven) with improved speed and/or efficiency, thereby improving operation of systems and/or devices (e.g., vehicle hosts 300) implementing said services and/or applications.

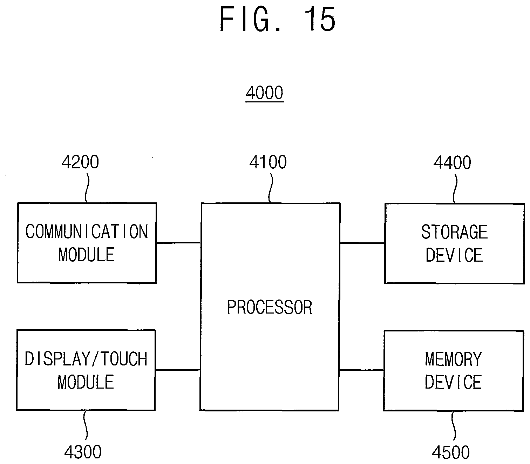

FIG. 15 is a block diagram illustrating an electronic system according to some example embodiments.

Referring to FIG. 15, an electronic system 4000 includes at least one processor 4100, a communication module 4200, a display/touch module 4300, a storage device 4400 and a memory device 4500. For example, the electronic system 4000 may be any mobile system or any computing system.

The processor 4100 controls operations of the electronic system 4000. The processor 4100 may execute an OS and at least one application to provide an internet browser, games, videos, or the like. The communication module 4200 performs wireless or wire communications with an external system. The display/touch module 4300 displays data processed by the processor 4100 and/or receives data through a touch panel. The storage device 4400 stores user data. The memory device 4500 temporarily stores data used for processing the operations of the electronic system 4000. The processor 4100 may correspond to the host 300 in FIG. 1, and the storage device 4400 may correspond to the storage controller 100 and the storage memory 500.

As described above, a storage controller, a storage system and a method according to some example embodiments may efficiently increase the speed of performing the deep learning based on moving the request prediction data, which is expected to be requested by the host, from the storage memory to the buffer memory having the higher operation speed than that of the storage memory, in advance before the host issues the read request for the request prediction data and rapidly transfer the request prediction data stored in the buffer memory to the host in response to the read request.

Embodiments of the inventive concepts may be applied to various electronic devices and/or systems including the storage device and the storage system. For example, embodiments of the inventive concepts may be applied to systems such as a mobile phone, a smart phone, a tablet computer, a laptop computer, a personal digital assistant (PDA), a portable multimedia player (PMP), a digital camera, a portable game console, a music player, a camcorder, a video player, a navigation device, a wearable device, an internet of things (IoT) device, an internet of everything (IoE) device, an e-book reader, a virtual reality (VR) device, an augmented reality (AR) device, a robotic device, a drone, etc.

The foregoing is illustrative of example embodiments and is not to be construed as limiting thereof. Although some example embodiments have been described, those skilled in the art will readily appreciate that many modifications are possible in the example embodiments without materially departing from the novel teachings and advantages of the example embodiments. Accordingly, all such modifications are intended to be included within the scope as defined in the claims. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims.

## Claims

1. A system comprising:
a host (300) configured to perform deep learning;
a storage controller (100);
a storage memory (500); and
a buffer memory (130),
the storage controller (100) comprising:
a learning pattern processor (150); and
a storage processor (110),
wherein the learning pattern processor (150) is configured, whenever receiving the address corresponding to a read request or a write request from the host (300), to use the address for estimating request prediction data to generate estimated result values (ESTMRES), and to transfer the estimated result values (ESTMRES) to the storage processor (110), wherein the request prediction data is the data expected to be requested by the host (300) during the next epoch,
wherein the storage processor (110) is configured to read the estimated request prediction data from the storage memory (500) based on the estimated result values (ESTMRES), and to store the read estimated request prediction data in the buffer memory (130), the reading and the storing being performed before the host (300) issues a read request for the request prediction data, and the operation speed of the buffer memory (130) being higher than the operation speed of the storage memory (500),
wherein the generation of the estimated result values (ESTMRES) by the learning pattern processor (150) comprises generating an estimate of the size of the learning data and generating the estimated start and end time points of the forward propagation (FP) and the backward propagation (BP) based on a matched address range, and
wherein the request prediction data includes first data and second data, the first data being the learning data requested from the host (300) to perform the deep learning; and the second data being the variables that are updated repeatedly per epoch based on the first data during the deep learning.

2. The system claim 1, wherein the second data include at least one of weight values (W[k]), bias values (b[k]), or intermediate result values (A[k]) of the deep learning.

3. The system of claim 1, wherein the generating the estimate of the size of the learning data is based on comparing all data corresponding to a read request during the forward propagation (FP) and all data corresponding to a read request during the backward propagation (BP).

4. The system of claim 1 or 3, wherein the generating the estimate of the size of the learning data is based on a mismatched address range determined based on comparing addresses corresponding to a write request and a read request during the forward propagation (FP) and addresses corresponding to a write request and a read request during the backward propagation (BP).

5. The system of claim 4, configured to determine the matched address range based on comparing an address corresponding to the read request during the forward propagation (FP) and an address corresponding to the read request during the backward propagation (BP).

6. The system of any one of the preceding claims, wherein the learning pattern processor (150) is configured to estimate the size of weight values (W[k]) and bias values (b[k]) based on comparing all data corresponding to a read request during the forward propagation (FP) and a portion of data corresponding to a read request during the backward propagation (BP).

7. The system of any one of the preceding claims, wherein the learning pattern processor (150) is configured to estimate the size of weight values (W[k]) and bias values (b[k]) based on a matched address range, the matched address range determined based on comparing an address corresponding to a read request during the forward propagation (FP) and an address corresponding to a read request during the backward propagation (BP).

8. The system of any one of the preceding claims, wherein the learning pattern processor (150) is configured to estimate the size of first intermediate result values (A[1:N]) and the size of second intermediate result values (Z[1:N]) based on comparing all data corresponding to a write request during the forward propagation (FP) and a portion of data corresponding to a read request during the backward propagation (BP).

9. The system of any one of the preceding claims, wherein the learning pattern processor (150) is configured to estimate the size of first intermediate result values (A[1:N]) and second intermediate result values (Z[1:N]) based on a matched address range determined based comparing an address corresponding to a write request during the forward propagation (FP) and an address corresponding to a read request during the backward propagation (BP).

10. The system of claim 9, wherein the generating the estimated start and end time points of the forward propagation (FP) and start and end time points of the backward propagation (BP) based on the matched address range is based on comparing the address corresponding to the write request during the forward propagation (FP) and the address corresponding to the read request during the backward propagation (BP).

11. The system of any one of the preceding claims, wherein the learning pattern processor (150) is configured to receive deviations of weight values (W[k]) and bias values (b[k]) from the host (300) to generate updated weight values and updated bias values based on the deviations of the weight values (dW[k]) and the bias values (db[k]),
wherein the storage controller (100) is configured to store the updated values in the storage memory (500) and/or the buffer memory (130).

12. A method of operating a storage controller (100) comprising a learning pattern processor (150) and a storage processor (110), the method comprising whenever the learning pattern processor (150) receives the address corresponding to a read request or a write request from a host (300):
estimating, by the learning pattern processor (150) using the address, request prediction data to generate estimated result values (ESTMRES), wherein the request prediction data is the data expected to be requested by the host (300) during the next epoch;
transferring the estimated result values (ESTMRES) to the storage processor (110);
reading, by the storage processor (110), the request prediction data from a storage memory (500) based on the estimated result values (ESTMRES); and
storing, by the storage processor (100), the request prediction data in a buffer memory (130),
wherein the reading and the storing is performed before the host (300) issues a read request for the request prediction data,
wherein the operation speed of the buffer memory (130) is higher than the operation speed of the storage memory (500),
wherein the generation of the estimated result values (ESTMRES) by the learning pattern processor (150) comprises estimating the size of learning data and estimating the start and end time points of the forward propagation and the backward propagation (BP) based on a matched address range, and
wherein the request prediction data includes first data and second data, the first data being the learning data requested from the host (300) to perform the deep learning, and the second data being the variables that are updated repeatedly per epoch based on the first data during the deep learning.

## Patentansprüche

1. System, Folgendes umfassend:
einen Host (300), der konfiguriert ist, um tiefes Lernen durchzuführen;
eine Speichersteuerung (100);
einen Speicher (500); und
einen Pufferspeicher (130),
wobei die Speichersteuerung (100) Folgendes umfasst:
einen Lernmusterprozessor (150); und
einen Speicherprozessor (110),
wobei der Lernmusterprozessor (150) so konfiguriert ist, dass er, wenn er die einer Leseanforderung oder einer Schreibanforderung von dem Host (300) entsprechende Adresse empfängt, die Adresse zum Schätzen von Anforderungsvorhersagedaten verwendet, um geschätzte Ergebniswerte (ESTMRES) zu erzeugen, und die geschätzten Ergebniswerte (ESTMRES) an den Speicherprozessor (110) überträgt, wobei die Anforderungsvorhersagedaten die Daten sind, von denen erwartet wird, dass sie von dem Host (300) während der nächsten Epoche angefordert werden,
wobei der Speicherprozessor (110) so konfiguriert ist, dass er die geschätzten Anforderungsvorhersagedaten aus dem Speicher (500) auf der Grundlage der geschätzten Ergebniswerte (ESTMRES) liest und die gelesenen geschätzten Anforderungsvorhersagedaten in dem Pufferspeicher (130) speichert, wobei das Lesen und das Speichern durchgeführt werden, bevor der Host (300) eine Leseanforderung für die Anforderungsvorhersagedaten ausgibt, und die Betriebsgeschwindigkeit des Pufferspeichers (130) höher ist als die Betriebsgeschwindigkeit des Speichers (500),
wobei die Erzeugung der geschätzten Ergebniswerte (ESTMRES) durch den Lernmusterprozessor (150) das Erzeugen einer Schätzung der Größe der Lerndaten und das Erzeugen der geschätzten Start- und Endzeitpunkte der Vorwärtspropagation (FP) und der Rückwärtspropagation (BP) auf der Grundlage eines abgeglichenen Adressbereichs umfasst, und
wobei die Anforderungsvorhersagedaten erste Daten und zweite Daten einschließen, wobei die ersten Daten die Lerndaten sind, die von dem Host (300) angefordert werden, um das tiefe Lernen durchzuführen; und die zweiten Daten die Variablen sind, die wiederholt pro Epoche auf der Grundlage der ersten Daten während des tiefen Lernens aktualisiert werden.

2. System Anspruch 1, wobei die zweiten Daten mindestens einen von Gewichtungswerten (W[k]), Verzerrungswerten (b[k]) oder Zwischenergebniswerten (A[k]) des tiefen Lernens einschließen.

3. System nach Anspruch 1, wobei das Erzeugen der Schätzung der Größe der Lerndaten auf dem Vergleich aller Daten, die einer Leseanforderung während der Vorwärtspropagation (FP) entsprechen, und aller Daten, die einer Leseanforderung während der Rückwärtspropagation (BP) entsprechen, basiert.

4. System nach Anspruch 1 oder 3, wobei das Erzeugen der Schätzung der Größe der Lerndaten auf einem nicht abgeglichenen Adressbereich basiert, der auf der Grundlage des Vergleichs von Adressen, die einer Schreibanforderung und einer Leseanforderung während der Vorwärtspropagation (FP) entsprechen, und von Adressen, die einer Schreibanforderung und einer Leseanforderung während der Rückwärtspropagation (BP) entsprechen, bestimmt wird.

5. System nach Anspruch 4, konfiguriert zum Bestimmen des abgeglichenen Adressbereichs auf der Grundlage des Vergleichs einer Adresse, die der Leseanforderung während der Vorwärtspropagation (FP) entspricht, und einer Adresse, die der Leseanforderung während der Rückwärtspropagation (BP) entspricht.

6. System nach einem der vorhergehenden Ansprüche, wobei der Lernmusterprozessor (150) so konfiguriert ist, dass er die Größe von Gewichtungswerten (W[k]) und Verzerrungswerten (b[k]) auf der Grundlage des Vergleichs aller Daten, die einer Leseanforderung während der Vorwärtspropagation (FP) entsprechen, und eines Teils der Daten, die einer Leseanforderung während der Rückwärtspropagation (BP) entsprechen, schätzt.

7. System nach einem der vorhergehenden Ansprüche, wobei der Lernmusterprozessor (150) so konfiguriert ist, dass er die Größe von Gewichtungswerten (W[k]) und Verzerrungswerten (b[k]) auf der Grundlage eines abgeglichenen Adressbereichs schätzt, wobei der abgeglichene Adressbereich auf der Grundlage des Vergleichs einer Adresse, die einer Leseanforderung während der Vorwärtspropagation (FP) entspricht, und einer Adresse, die einer Leseanforderung während der Rückwärtspropagation (BP) entspricht, bestimmt wird.

8. System nach einem der vorhergehenden Ansprüche, wobei der Lernmusterprozessor (150) so konfiguriert ist, dass er die Größe von ersten Zwischenergebniswerten (A[1:N]) und die Größe von zweiten Zwischenergebniswerten (Z[1:N]) auf der Grundlage des Vergleichs aller Daten, die einer Schreibanforderung während der Vorwärtspropagation (FP) entsprechen, und eines Teils der Daten, die einer Leseanforderung während der Rückwärtspropagation (BP) entsprechen, schätzt.

9. System nach einem der vorhergehenden Ansprüche, wobei der Lernmusterprozessor (150) so konfiguriert ist, dass er die Größe von ersten Zwischenergebniswerten (A[1:N]) und zweiten Zwischenergebniswerten (Z[1:N]) auf der Grundlage eines abgeglichenen Adressbereichs schätzt, der auf der Grundlage des Vergleichs einer Adresse, die einer Schreibanforderung während der Vorwärtspropagation (FP) entspricht, und einer Adresse, die einer Leseanforderung während der Rückwärtspropagation (BP) entspricht, bestimmt wird.

10. System nach Anspruch 9, wobei das Erzeugen der geschätzten Start- und Endzeitpunkte der Vorwärtspropagation (FP) und der Start- und Endzeitpunkte der Rückwärtspropagation (BP) auf der Grundlage des abgeglichenen Adressbereichs auf dem Vergleichen der Adresse, die der Schreibanforderung während der Vorwärtspropagation (FP) entspricht, und der Adresse, die der Leseanforderung während der Rückwärtspropagation (BP) entspricht, basiert.

11. System nach einem der vorhergehenden Ansprüche, wobei der Lernmusterprozessor (150) so konfiguriert ist, dass er Abweichungen von Gewichtungswerten (W[k]) und Verzerrungswerten (b[k]) vom Host (300) empfängt, um aktualisierte Gewichtungswerte und aktualisierte Verzerrungswerte auf der Grundlage der Abweichungen der Gewichtungswerte (dW[k]) und der Verzerrungswerte (db[k]) zu erzeugen,
wobei die Speichersteuerung (100) konfiguriert ist, um die aktualisierten Werte in dem Speicher (500) und/oder dem Pufferspeicher (130) zu speichern.

12. Verfahren zum Betreiben einer Speichersteuerung (100), die einen Lernmusterprozessor (150) und einen Speicherprozessor (110) umfasst, wobei das Verfahren Folgendes umfasst, wenn der Lernmusterprozessor (150) die einer Leseanforderung oder einer Schreibanforderung entsprechende Adresse von einem Host (300) empfängt:
Schätzen von Anforderungsvorhersagedaten durch den Lernmusterprozessor (150) unter Verwendung der Adresse, um geschätzte Ergebniswerte (ESTMRES) zu erzeugen, wobei die Anforderungsvorhersagedaten die Daten sind, von denen erwartet wird, dass sie von dem Host (300) während der nächsten Epoche angefordert werden;
Übertragen der geschätzten Ergebniswerte (ESTMRES) an den Speicherprozessor (110),
Lesen der Anforderungsvorhersagedaten aus einem Speicher (500) durch den Speicherprozessor (110) auf der Grundlage der geschätzten Ergebniswerte (ESTMRES); und
Speichern der Anforderungsvorhersagedaten durch den Speicherprozessor (100) in einem Pufferspeicher (130),
wobei das Lesen und das Speichern durchgeführt werden, bevor der Host (300) eine Leseanforderung für die Anforderungsvorhersagedaten ausgibt,
wobei die Betriebsgeschwindigkeit des Pufferspeichers (130) höher ist als die Betriebsgeschwindigkeit des Speichers (500),
wobei die Erzeugung der geschätzten Ergebniswerte (ESTMRES) durch den Lernmusterprozessor (150) das Schätzen der Größe der Lerndaten und das Schätzen der Start- und Endzeitpunkte der Vorwärtspropagation (FP) und der Rückwärtspropagation (BP) auf der Grundlage eines abgeglichenen Adressbereichs umfasst, und
wobei die Anforderungsvorhersagedaten erste Daten und zweite Daten einschließen, wobei die ersten Daten die Lerndaten sind, die von dem Host (300) angefordert werden, um das tiefe Lernen durchzuführen, und die zweiten Daten die Variablen sind, die wiederholt pro Epoche auf der Grundlage der ersten Daten während des tiefen Lernens aktualisiert werden.

## Revendications

1. Système comprenant :
un hôte (300) configuré pour réaliser un apprentissage en profondeur ;
un contrôleur de stockage (100) ;
une mémoire de stockage (500) ; et
une mémoire tampon (130),
le contrôleur de stockage (100) comprenant :
un processeur de motif d'apprentissage (150) ; et
un processeur de stockage (110),
dans lequel le processeur de motif d'apprentissage (150) est configuré, lorsqu'il reçoit l'adresse correspondant à une demande de lecture ou une demande d'écriture de l'hôte (300), pour utiliser l'adresse pour estimer des données de prédiction de demande pour générer des valeurs de résultat estimées (ESTMRES) et pour transférer les valeurs de résultat estimées (ESTMRES) au processeur de stockage (110), dans lequel les données de prédiction de demande sont les données qu'on s'attend à ce que l'hôte (300) demande pendant la prochaine époque,
dans lequel le processeur de stockage (110) est configuré pour lire les données de prédiction de demande estimées provenant de la mémoire de stockage (500) sur la base des valeurs de résultat estimées (ESTMRES) et pour stocker les données de prédiction de demande estimée lues dans la mémoire tampon (130), la lecture et le stockage étant réalisés avant que l'hôte (300) n'émette une demande de lecture pour les données de prédiction de demande, et la vitesse de fonctionnement de la mémoire tampon (130) étant supérieure à la vitesse de fonctionnement de la mémoire de stockage (500),
dans lequel la génération des valeurs de résultat estimées (ESTMRES) par le processeur de motif d'apprentissage (150) comprend la génération d'une estimation de la taille des données d'apprentissage et la génération des points temporels de début et de fin de la propagation en avant (FP) et de la propagation en arrière (BP) sur la base d'une plage d'adresse adaptée, et
dans lequel les données de prédiction de demande comprennent des premières données et des secondes données, les premières données étant les données d'apprentissage requises auprès de l'hôte (300) pour réaliser l'apprentissage approfondi ; et les secondes données étant les variables qui sont mises à jour de manière répétée par époque sur la base des premières données pendant l'apprentissage approfondi.

2. Système la revendication 1, dans lequel les secondes données incluent au moins l'une parmi des valeurs de poids (W[k]), des valeurs de biais (b[k]), ou des valeurs de résultat intermédiaire (A[k]) de l'apprentissage approfondi.

3. Système selon la revendication 1, dans lequel la génération de l'estimation de la taille des données d'apprentissage est basée sur la comparaison de toutes les données correspondant à une demande de lecture pendant la propagation vers l'avant (FP) et de toutes les données correspondant à une demande de lecture pendant la propagation vers l'arrière (BP).

4. Système selon la revendication 1 ou 3, dans lequel la génération de l'estimation de la taille des données d'apprentissage est basée sur une plage d'adresse décalée déterminée sur la base de la comparaison d'adresses correspondant à une demande d'écriture et une demande de lecture pendant la propagation vers l'avant (FP) et d'adresses correspondant à une demande d'écriture et à une demande de lecture pendant la propagation vers l'arrière (BP).

5. Système selon la revendication 4, configuré pour déterminer la plage d'adresse adaptée sur la base de la comparaison d'une adresse correspondant à la demande de lecture pendant la propagation vers l'avant (FP) et d'une adresse correspondant à la demande de lecture pendant la propagation vers l'arrière (BP).

6. Système selon l'une quelconque des revendications précédentes, dans lequel le processeur de motif d'apprentissage (150) est configuré pour estimer la taille de valeurs de poids (W[k]) et de valeurs de biais (b[k]) sur la base de la comparaison de toutes les données correspondant à une demande de lecture pendant la propagation vers l'avant (FP) et d'une partie de données correspondant à une demande de lecture pendant la propagation vers l'arrière (BP).

7. Système selon l'une quelconque des revendications précédentes, dans lequel le processeur de motif d'apprentissage (150) est configuré pour estimer la taille de valeurs de poids (W[k]) et de valeurs de biais (b[k]) sur la base d'une plage d'adresse adaptée, la plage d'adresse adaptée étant déterminée sur la base de la comparaison d'une adresse correspondant à une demande de lecture pendant la propagation vers l'avant (FP) et d'une adresse correspondant à une demande de lecture pendant la propagation vers l'arrière (BP).

8. Système selon l'une quelconque des revendications précédentes, dans lequel le processeur de motif d'apprentissage (150) est configuré pour estimer la taille de premières valeurs de résultat intermédiaire (A[1:N]) et la taille de secondes valeurs de résultat intermédiaires (Z[1:N]) sur la base de la comparaison de toutes les données correspondant à une demande d'écriture pendant la propagation en avant (FP) et d'une partie de données correspondant à une demande de lecture pendant la propagation vers l'arrière (RP).

9. Système selon l'une quelconque des revendications précédentes, dans lequel le processeur de motif d'apprentissage (150) est configuré pour estimer la taille de premières valeurs de résultat intermédiaires (A[1:N]) et de secondes valeurs de résultat intermédiaires (Z[1:N]) sur la base d'une plage d'adresse adaptée déterminée sur la base de la comparaison d'une adresse correspondant à une demande d'écriture pendant la propagation en avant (FP) et d'une adresse correspondant à une demande de lecture pendant la propagation en arrière (BP).

10. Système selon la revendication 9, dans lequel la génération des points temporels de début et de fin de la propagation en avant (FP) et des points temporels de début et de fin de la propagation en arrière (BP) sur la base de la plage d'adresse adaptée est basée sur la comparaison de l'adresse correspondant à la demande d'écriture pendant la propagation en avant (FP) et de l'adresse correspondant à la demande de lecture pendant la propagation en arrière (BP).

11. Système selon l'une quelconque des revendications précédentes, dans lequel le processeur de motif d'apprentissage (150) est configuré pour recevoir des déviations de valeurs de poids (W[k]) et des valeurs de biais (b[k]) de l'hôte (300) pour générer des valeurs de poids mises à jour et des valeurs de biais mises à jour sur la base des écarts des valeurs de poids (dW[k]) et les valeurs de biais (db[k]),
dans lequel le contrôleur de stockage (100) est configuré pour stocker les valeurs mises à jour dans la mémoire de stockage (500) et/ou la mémoire tampon (130).

12. Procédé de fonctionnement d'un contrôleur de stockage (100) comprenant un processeur de motif d'apprentissage (150) et un processeur de stockage (110), le procédé comprenant, lorsque le processeur de motif d'apprentissage (150) reçoit l'adresse correspondant à une demande de lecture ou une demande d'écriture de l'hôte (300) :
l'estimation, par le processeur de motif d'apprentissage (150) en utilisant l'adresse, des données de prédiction de demande pour générer des valeurs de résultat estimées (ESTMRES), dans lequel les données de prédiction de demande sont les données que l'on s'attend à ce que l'hôte (300) demande pendant la prochaine époque ;
le transfert des valeurs de résultat estimées (ESTMRES) au processeur de stockage (110) ;
la lecture, par le processeur de stockage (110), des données de prédiction de demande à partir d'une mémoire de stockage (500) sur la base des valeurs de résultat estimées (ESTMRES) ; et
le stockage, par le processeur de stockage (100), des données de prédiction de demande dans une mémoire tampon (130),
dans lequel la lecture et le stockage sont réalisés avant que l'hôte (300) n'émette une demande de lecture pour les données de prédiction de demande,
dans lequel la vitesse de fonctionnement de la mémoire tampon (130) est supérieure à la vitesse de fonctionnement de la mémoire de stockage (500),
dans lequel la génération des valeurs de résultat estimées (ESTMRES) par le processeur de motif d'apprentissage (150) comprend l'estimation de la taille des données d'apprentissage et l'estimation des points temporels de début et de fin de la propagation vers l'avant et de la propagation vers l'arrière (BP) sur la base d'une plage d'adresse adaptée, et
dans lequel les données de prédiction de demande incluent de premières données et des secondes données, les premières données étant les données d'apprentissage requises auprès de l'hôte (300) pour effectuer l'apprentissage approfondi et les secondes données étant les variables qui sont mises à jour de manière répétée par époque sur la base des premières données pendant l'apprentissage approfondi.
